# EUROPEAN PATENT APPLICATION

(11) **EP 2 378 259 A1**
(43) Date of publication of application: **19.10.2011**
(21) Application number: 11152437.7
(22) Date of filing: 27.01.2011
(51) Int. Cl.: G01J 5/60, G01J 5/00, G01J 5/08

(54) **Multi-spectral pyrometry imaging system**

(30) Priority: 30.03.2010 US 750425
(71) Applicant: General Electric Company, Schenectady, NY 12345 (US)
(72) Inventor: Estevadeordal, Jordi, Niskayuna, NY 12309 (US); Nirmalan, Nirm Velumylum, Niskayuna, NY 12309 (US); Wang, Guanghua, Niskayuna, NY 12309 (US); Sakami, Mohamed, Niskayuna, NY 12309 (US)
(74) Representative: Gray, Thomas

(57) **Abstract**

In one embodiment, a system (10) includes a turbine (18) including multiple components (52, 54, 58, 60, 62, 66, 70, 72) in fluid communication with a working fluid (46) that provides power or thrust. The system (10) also includes an imaging system (36) in optical communication with at least one component (52, 54, 58, 60, 62, 66, 70, 72). The imaging system (36) is configured to receive a broad wavelength band image (74) of the at least one component (52, 54, 58, 60, 62, 66, 70, 72) during operation of the turbine (18), to split the broad wavelength band image (74) into multiple narrow wavelength band images (90, 106, 122, 130, 136, 170, 172, 174, 176), and to output a signal indicative of a two-dimensional intensity map of each narrow wavelength band image (90, 106, 122, 130, 136, 170, 172, 174, 176).

## Description

### BACKGROUND OF THE INVENTION

The subject matter disclosed herein relates to a multi-spectral pyrometry imaging system.

Certain gas turbine engines include a turbine having viewing ports configured to facilitate monitoring of various components within the turbine. For example, a pyrometry system may receive radiation signals through the viewing ports to measure the temperature of certain components within a hot gas path of the turbine. The pyrometry system may include an optical sensor configured to measure the intensity of radiation emitted by the turbine components within a fixed wavelength range. As will be appreciated, by assuming an emissivity, the temperature of the components may be determined based on the radiation intensity at a particular wavelength.

Unfortunately, emissivity of the components may vary over time due to changes in temperature, buildup of residue on the components, oxidation of turbine components and/or dirt accumulation on the viewing port window. Consequently, pyrometry systems which measure intensity within a fixed wavelength band may provide inaccurate temperature measurements. In addition, because certain pyrometry systems provide either a line of sight point measurement or an average temperature of each component, thermal stress caused by temperature gradients across the component may not be detected.

### BRIEF DESCRIPTION OF THE INVENTION

In a first embodiment, a system includes a turbine and a viewing port into the turbine. The system also includes a wavelength-splitting device in optical communication with the viewing port. The wavelength-splitting device is configured to split a broad wavelength band image of a turbine component into multiple narrow wavelength band images. The system further includes at least one detector array in optical communication with the wavelength-splitting device. The at least one detector array is configured to receive the narrow wavelength band images, and to output a signal indicative of a two-dimensional intensity map of each narrow wavelength band image.

In a second embodiment, a system includes a turbine including multiple components in fluid communication with a working fluid that provides power or thrust. The system also includes an imaging system in optical communication with at least one component. The imaging system is configured to receive a broad wavelength band image of the at least one component during operation of the turbine, to split the broad wavelength band image into multiple narrow wavelength band images, and to output a signal indicative of a two-dimensional intensity map of each narrow wavelength band image.

In a third embodiment, a method includes receiving a broad wavelength band image of a turbine component, and splitting the broad wavelength band image into multiple narrow wavelength band images. The method also includes outputting a signal indicative of a two-dimensional intensity map of each narrow wavelength band image.

In a fourth embodiment, a system includes a turbine including multiple components in fluid communication with a working fluid that provides power or thrust. The system also includes a wavelength-splitting device in optical communication with at least one component. The wavelength-splitting device includes multiple dichroic mirrors configured to progressively split a broad wavelength band image of the at least one component into multiple narrow wavelength band images. The system further includes at least one detector in optical communication with the wavelength-splitting device. The at least one detector is configured to receive the narrow wavelength band images, and to output a signal indicative of an intensity of each narrow wavelength band image.

### BRIEF DESCRIPTION OF THE DRAWINGS

These and other features, aspects, and advantages of embodiments disclosed herein will become better understood when the following detailed description is read with reference to the accompanying drawings in which like characters represent like parts throughout the drawings, wherein:
FIG. 1 is a block diagram of a turbine system including an imaging system configured to capture two-dimensional narrow wavelength band images of a turbine component in accordance with certain disclosed embodiments;
FIG. 2 is a cross-sectional view of a turbine section, illustrating various turbine components that may be monitored by the imaging system in accordance with certain disclosed embodiments;
FIG. 3 is a schematic diagram of an embodiment of a wavelength-splitting device employing multiple dichroic mirrors to convert a broad wavelength band image into multiple narrow wavelength band images in accordance with certain disclosed embodiments;
FIG. 4 is a schematic diagram of an alternative embodiment of a wavelength-splitting device employing an image splitter and multiple filters to convert a broad wavelength band image into multiple narrow wavelength band images in accordance with certain disclosed embodiments;
FIG. 5 is a schematic diagram of a further embodiment of a wavelength-splitting device including a multichannel wavelength separation prism to convert a broad wavelength band image into multiple narrow wavelength band images in accordance with certain disclosed embodiments;
FIG. 6 is a schematic diagram of yet another embodiment of a wavelength-splitting device including a filter mask having multiple narrow wavelength band filters to convert a broad wavelength band image into multiple narrow wavelength band images in accordance with certain disclosed embodiments; and
FIG. 7 is a flowchart of a method for determining a two-dimensional temperature map of a turbine component in accordance with certain disclosed embodiments.

### DETAILED DESCRIPTION OF THE INVENTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Embodiments disclosed herein may provide data sufficient to precisely determine thermal stress within a turbine component by accurately measuring a two-dimensional temperature distribution of the turbine component. In one embodiment, a pyrometry system includes a wavelength-splitting device in optical communication with a viewing port into a turbine. The wavelength-splitting device is configured to split a broad wavelength band image of a turbine component into multiple narrow wavelength band images. The pyrometry system also includes a detector array in optical communication with the wavelength-splitting device. The detector array is configured to receive the narrow wavelength band images, and to output a signal indicative of a two-dimensional intensity map of each narrow wavelength band image. A controller communicatively coupled to the detector array is configured to receive the signal and to compute a two-dimensional temperature map of the turbine component based on the signal. Because the signal includes data indicative of multiple narrow wavelength band images, the controller may be able to compute an apparent-effective emissivity of the turbine component such that a more accurate temperature may be determined, as compared to pyrometry systems which compute temperature based on a single fixed wavelength band image. In addition, because the detector array and controller are configured to provide a two-dimensional temperature map of the turbine component, thermal stress within the component may be determined by measuring a thermal gradient across the turbine component.

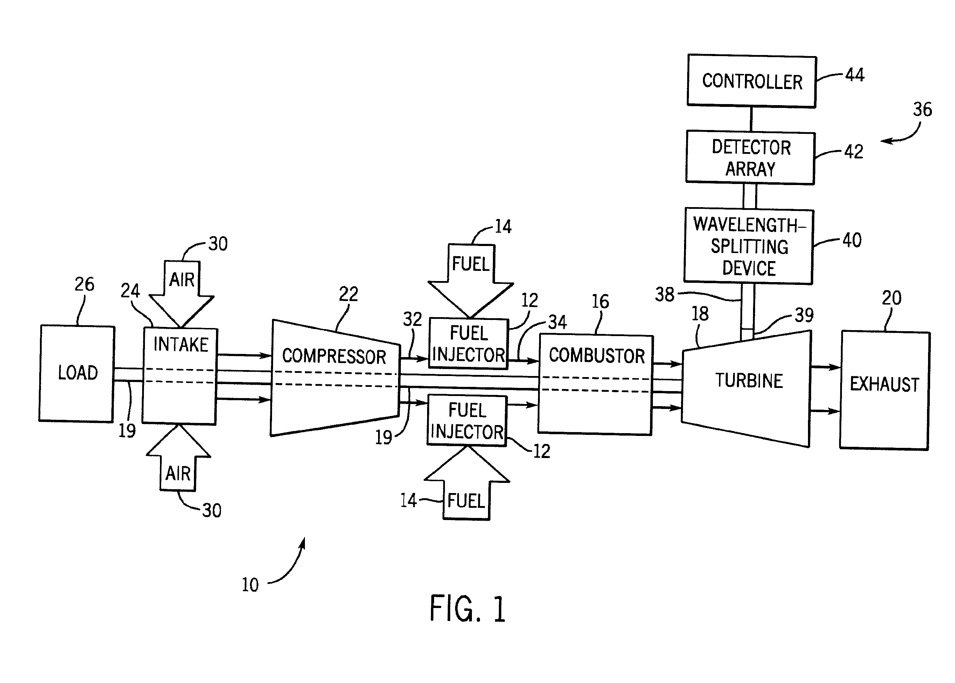

Turning now to the drawings, FIG. 1 is a block diagram of a turbine system 10 including an imaging system configured to capture two-dimensional narrow wavelength band images of a turbine component. The turbine system 10 includes a fuel injector 12, a fuel supply 14, and a combustor 16. As illustrated, the fuel supply 14 routes a liquid fuel and/or gas fuel, such as natural gas, to the gas turbine system 10 through the fuel injector 12 into the combustor 16. As discussed below, the fuel injector 12 is configured to inject and mix the fuel with compressed air. The combustor 16 ignites and combusts the fuel-air mixture, and then passes hot pressurized exhaust gas into a turbine 18. As will be appreciated, the turbine 18 includes one or more stators having fixed vanes or blades, and one or more rotors having blades which rotate relative to the stators. The exhaust gas passes through the turbine rotor blades, thereby driving the turbine rotor to rotate. Coupling between the turbine rotor and a shaft 19 will cause the rotation of the shaft 19, which is also coupled to several components throughout the gas turbine system 10, as illustrated. Eventually, the exhaust of the combustion process may exit the gas turbine system 10 via an exhaust outlet 20.

A compressor 22 includes blades rigidly mounted to a rotor which is driven to rotate by the shaft 19. As air passes through the rotating blades, air pressure increases, thereby providing the combustor 16 with sufficient air for proper combustion. The compressor 22 may intake air to the gas turbine system 10 via an air intake 24. Further, the shaft 19 may be coupled to a load 26, which may be powered via rotation of the shaft 19. As will be appreciated, the load 26 may be any suitable device that may use the power of the rotational output of the gas turbine system 10, such as a power generation plant or an external mechanical load. For example, the load 26 may include an electrical generator, a propeller of an airplane, and so forth. The air intake 24 draws air 30 into the gas turbine system 10 via a suitable mechanism, such as a cold air intake. The air 30 then flows through blades of the compressor 22, which provides compressed air 32 to the combustor 16. In particular, the fuel injector 12 may inject the compressed air 32 and fuel 14, as a fuel-air mixture 34, into the combustor 16. Alternatively, the compressed air 32 and fuel 14 may be injected directly into the combustor for mixing and combustion.

As illustrated, the turbine system 10 includes an imaging system 36 optically coupled to the turbine 18. In the illustrated embodiment, the imaging system 36 includes an optical connection 38 (e.g., fiber optic cable, optical waveguide, etc.) extending between a viewing port 39 into the turbine 18 and a wavelength-splitting device 40. As discussed in detail below, the wavelength-splitting device 40 is configured to receive a broad wavelength band image of a turbine component, and to split the broad wavelength band image into multiple narrow wavelength band images. A detector array 42 optically coupled to the wavelength-splitting device 40 is configured to receive each of the narrow wavelength band images, and to output a signal indicative of a two-dimensional intensity map of each narrow wavelength band image. In the illustrated embodiment, the detector array 42 is communicatively coupled to a controller 44 which is configured to receive the signal and to compute a two-dimensional temperature map of the turbine component based on the signal. As discussed in detail below, because the imaging system 36 captures multiple narrow wavelength band images, a two-dimensional apparent-effective emissivity map of the turbine component may be generated, thereby providing a more accurate temperature measurement than configurations which measure intensity of a single wavelength band. In addition, because the imaging system 36 generates a two-dimensional temperature map, a temperature gradient across the turbine component may be measured, thereby providing additional information related to component stress, as compared to configurations which only measure an average temperature of the component.

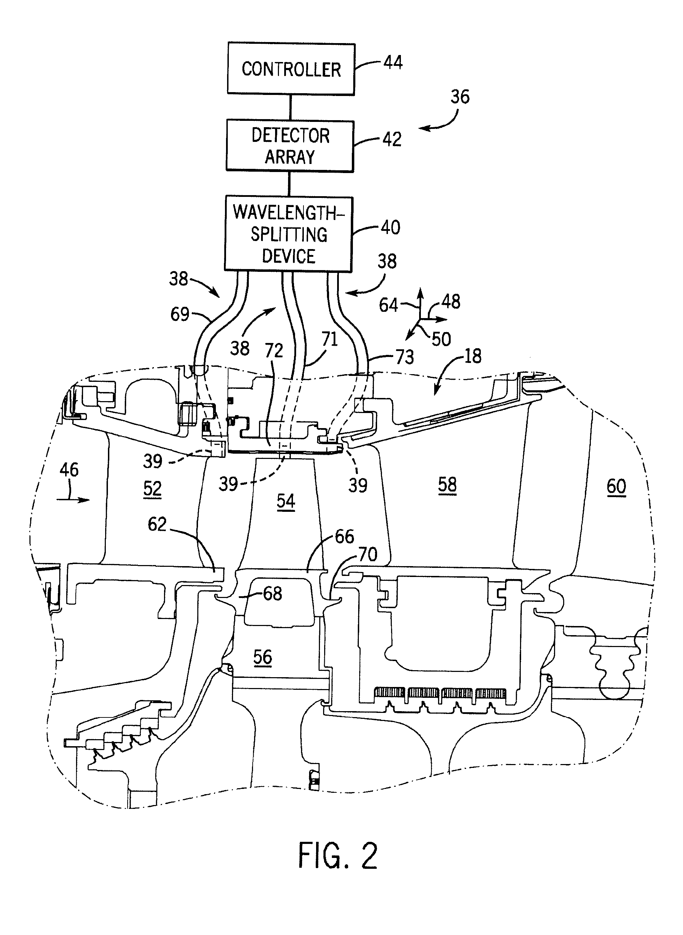

FIG. 2 is a cross-sectional view of a turbine section, illustrating various turbine components that may be monitored by the imaging system 36. As illustrated, exhaust gas/combustion products 46 from the combustor 16 flows into the turbine 18 in an axial direction 48 and/or a circumferential direction 50. The illustrated turbine 18 includes at least two stages, with the first two stages shown in FIG. 2. Other turbine configurations may include more or fewer turbine stages. For example, a turbine may include 1, 2, 3, 4, 5, 6, or more turbine stages. The first turbine stage includes vanes 52 and blades 54 substantially equally spaced in the circumferential direction 50 about the turbine 18. The first stage vanes 52 are rigidly mounted to the turbine 18 and configured to direct combustion gases toward the blades 54. The first stage blades 54 are mounted to a rotor 56 that is driven to rotate by the exhaust gas 46 flowing through the blades 54. The rotor 56, in turn, is coupled to the shaft 19, which drives the compressor 22 and the load 26. The exhaust gas 46 then flows through second stage vanes 58 and second stage blades 60. The second stage blades 60 are also coupled to the rotor 56. As the exhaust gas 46 flows through each stage, energy from the gas is converted into rotational energy of the rotor 56. After passing through each turbine stage, the exhaust gas 46 exits the turbine 18 in the axial direction 48.

In the illustrated embodiment, each first stage vane 52 extends outward from an endwall 62 in a radial direction 64. The endwall 62 is configured to block hot exhaust gas 46 from entering the rotor 56. A similar endwall may be present adjacent to the second stage vanes 58, and subsequent downstream vanes, if present. Similarly, each first stage blade 54 extends outward from a platform 66 in the radial direction 64. As will be appreciated, the platform 66 is part of a shank 68 which couples the blade 54 to the rotor 56. The shank 68 also includes a seal, or angel wing, 70 configured to block hot exhaust gas 46 from entering the rotor 56. Similar platforms and angel wings may be present adjacent to the second stage blades 60, and subsequent downstream blades, if present. Furthermore, a shroud 72 is positioned radially outward from the first stage blades 54. The shroud 72 is configured to minimize the quantity of exhaust gas 46 that bypasses the blades 54. Gas bypass is undesirable because energy from the bypassing gas is not captured by the blades 54 and translated into rotational energy. While the imaging system 36 is described below with reference to monitoring components within the turbine 18 of a gas turbine engine 10, it should be appreciated that the imaging system 36 may be employed to monitor components within other rotating and/or reciprocating machinery, such as a turbine in which steam or another working fluid passes through turbine blades to provide power or thrust.

As will be appreciated, various components within the turbine 18 (e.g., vanes 52 and 58, blades 54 and 60, endwalls 62, platforms 66, angel wings 70, shrouds 72, etc.) will be exposed to the hot exhaust gas 46 from the combustor 16. Consequently, it may be desirable to measure a temperature of certain components during operation of the turbine 18 to ensure that the temperature remains within a desired range and/or to monitor thermal stress within the components. For example, the imaging system 36 may be configured to determine a two-dimensional temperature map of the first stage turbine blades 54. As will be appreciated, the two-dimensional temperature map may be utilized to determine a temperature gradient across each blade 54, thereby facilitating computation of thermal stress within the blade 54.

Because the temperature may vary across the surface of the blade 54, the illustrated embodiment includes three viewing ports 39 directed toward different regions of the blade 54. Three optical connections 38 optically couple the viewing ports 39 to the wavelength-splitting device 40. As illustrated, a first optical connection 69 is configured to convey an image of an upstream portion of the blade 54 to the wavelength-splitting device 40, a second optical connection 71 is configured to convey an image of a circumferential side of the blade 54 to the wavelength-splitting device 40, and a third optical connection 73 is configured to convey an image of a downstream portion of the blade 54 to the wavelength-splitting device 40. The viewing ports 39 may be angled in the axial direction 48, circumferential direction 50 and/or radial direction 64 to direct the viewing ports 39 toward desired regions of the blade 54. In alternative embodiments, more or fewer viewing ports 39 and optical connections 38 may be employed to obtain images of the first stage blade 54. For example, certain embodiments may employ 1, 2, 3, 4, 5, 6, 7, 8, or more viewing ports 39 and a corresponding number of optical connections 38 to convey images of the blade 54 to the wavelength-splitting device 40. As will be appreciated, the more viewing ports 39 and optical connections 38 employed, the more regions of the blade 54 that may be monitored. As previously discussed, the optical connections 38 may include a fiber optic cable or an optical imaging system (e.g., a rigid imaging optical waveguide system), for example. It should also be appreciated that certain embodiments may omit the optical connections 38, and the wavelength-splitting device 40 may be directly optically coupled to the viewing ports 39.

While the viewing ports 39 are directed toward the first stage blades 54 in the illustrated embodiment, it should be appreciated that the viewing ports 39 may be directed toward other turbine components in alternative embodiments. For example, one or more viewing ports 39 may be directed toward the first stage vanes 52, the second stage vanes 58, the second stage blades 60, the endwalls 62, the platforms 66, the angel wings 70, the shrouds 72, or other components within the turbine 18. Further embodiments may include viewing ports 39 directed toward multiple components within the turbine 18. Similar to the first stage blades 54, the imaging system 36 may determine a two-dimensional temperature map for each component within a field of view of a viewing port 39. In this manner, thermal stress within various turbine components may be measured, thereby providing an operator with data that may be used to adjust operational parameters of the turbine system 10 and/or to determine maintenance intervals.

As previously discussed, the optical connections 38 (e.g., fiber optic cable, optical waveguide, etc.) convey an image from the turbine 18 to the wavelength-splitting device 40. The wavelength-splitting device 40 is configured to receive a broad wavelength band image of the turbine component, and to split the broad wavelength band image into multiple narrow wavelength band images. The detector array 42 optically coupled to the wavelength-splitting device 40 is configured to receive each of the narrow wavelength band images, and to output a signal indicative of a two-dimensional intensity map of each narrow wavelength band image. The detector array 42 may be configured to capture multiple images over a period of time. As will be appreciated, certain turbine components, such as the first stage blades 54 described above, may rotate at high speed along the circumferential direction 50 of the turbine 18. Consequently, to capture an image of such components, the detector array 42 may be configured to operate at a frequency sufficient to provide the controller 44 with a substantially still image of each component. For example, in certain embodiments, the detector array 42 may be configured to output the signal indicative of the two-dimensional intensity map of each narrow wavelength band image at a frequency greater than approximately 100,000, 200,000, 400,000, 600,000, 800,000, or 1,000,000 Hz, or more. In further embodiments, the detector array 42 may be configured to output the signal indicative of the two-dimensional intensity map of each narrow wavelength band image with an integration time shorter than approximately 10, 5, 3, 2, 1, or 0.5 microseconds, or less. In this manner, a two-dimensional temperature map may be generated for each rotating turbine component.

In certain embodiments, the optical connections 38 may be coupled to a multiplexer within the wavelength-splitting device 40 to provide the detector array 42 with images from each observation point. As will be appreciated, images from each optical connection 38 may be multiplexed in space or time. For example, if the multiplexer is configured to multiplex the images in space, each image may be projected onto a different portion of the detector array 42. In this configuration, an image from the first optical connection 69 may be directed toward an upper portion of the detector array 42, an image from the second optical connection 71 may be directed toward a central portion of the detector array 42, and an image from the third optical connection 73 may be directed toward a lower portion of the detector array 42. As a result, the detector array 42 may capture each image at one-third resolution. In other words, spatial resolution is inversely proportional to the number of spatially multiplexed signals. As will be appreciated, lower resolution provides the controller 44 with less spatial coverage of the turbine component than higher resolution. Therefore, the number of spatially multiplexed signals may be limited by the minimum resolution sufficient for the controller 44 to establish a desired two-dimensional temperature map of the turbine component.

Alternatively, images provided by the optical connections 38 may be multiplexed in time. For example, the detector array 42 may alternately capture an image from each optical connection 38 using the entire resolution of the detector array 42. Using this technique, the full resolution of the detector array 42 may be utilized, but the capture frequency may be reduced proportionally to the number of observation points scanned. For example, if two observation points are scanned and the detector array frequency is 100,000 Hz, the detector array 42 is only able to scan images from each observation point at 50,000 Hz. Therefore, the number of temporally multiplexed signals may be limited by the desired scanning frequency.

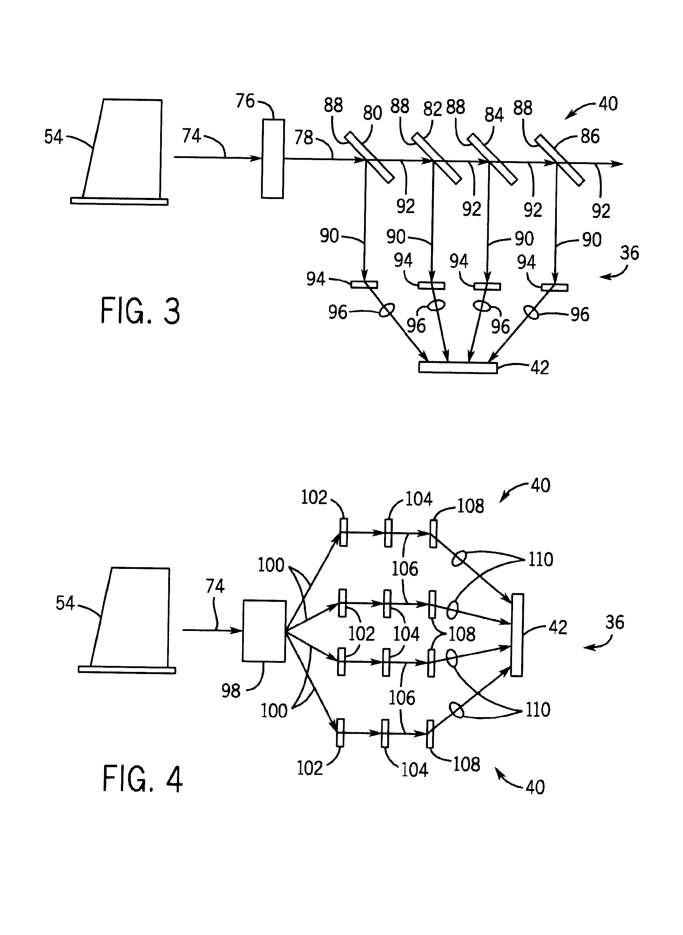

FIG. 3 is a schematic diagram of an embodiment of a wavelength-splitting device 40 employing multiple dichroic mirrors to convert a broad wavelength band image into multiple narrow wavelength band images. As illustrated, the imaging system 36 is directed toward a first stage turbine blade 54. However, it should be appreciated that the imaging system 36 may be directed toward other turbine components (e.g., vanes 52 and 58, blades 60, endwalls 62, platforms 66, angel wings 70, shrouds 72, etc.) in alternative embodiments. As will be appreciated, electromagnetic radiation may be emitted from the blade 54 and captured by the imaging system 36 as a broad wavelength band image 74. Such an image 74 may include radiation having a wavelength within the infrared, visible and/or ultraviolet regions of the electromagnetic spectrum.

Because the combustion products 46 may flow between the viewing port 39 and the blade 54, only certain wavelength bands may be transmitted to the imaging system 36. For example, certain combustion products species, such as water vapor and carbon dioxide, absorb and emit radiation over a wide range of wavelengths. As a result, radiation emitted by the blade 54 in only a fraction of wavelengths reaches the imaging system 36 with sufficient intensity and negligible interference from emitted radiation from the combustion products for accurate intensity measurement. Consequently, the imaging system 36 may be configured to measure the intensity of certain wavelengths which are more likely to pass through the combustion products 46 without significant absorption or interference. For example, wavelengths within the red portion of the visible spectrum and/or within the near infrared spectrum may pass through the combustion products 46 with less absorption than other frequency ranges. Therefore, certain embodiments may utilize such frequency ranges for temperature determination. However, it should be appreciated that alternative embodiments may measure an intensity of electromagnetic radiation within other portions of the visible, infrared and/or ultraviolet spectra.

As will be appreciated, temperature of a component may be determined by measuring the intensity of electromagnetic radiation emitted by the component at a particular wavelength. For example, assuming emissivity is one (Black Body assumption), Planck's Law may be utilized to compute temperature from a measured radiation intensity. However, because actual components may have an emissivity less than one, certain pyrometry systems assume a constant emissivity value. Because emissivity may vary based on a number of factors including temperature and wavelength, such an assumption may produce inaccurate temperature measurements. For example, the emissivity of a turbine component may vary as residue from the combustion products 46 accumulates on the component. In addition, residue and/or other debris may build up on the viewing port 39, thereby reducing the radiation intensity emitted by the component. Furthermore, combustion products such as soot may also contaminate the radiation signal from the component. Consequently, the imaging system 36 is configured to split a broad wavelength band image into multiple narrow wavelength band images, and to measure the intensity map of each narrow wavelength band image. In such a configuration, the controller 44, via multichannel algorithms, may be able to compute an apparent-effective emissivity of the turbine component such that a more accurate temperature may be determined. In addition, because the detector array 42 and controller 44 are configured to provide a two-dimensional temperature map of the turbine component (e.g., first stage turbine blade 54), thermal stress within the component may be determined by measuring a thermal gradient across the turbine component.

As illustrated, the broad wavelength band image 74 first passes through an optical collimator 76 which converts the radiation emitted from the blade 54 into a collimated beam 78. The collimated beam 78 then passes through a series of dichroic mirrors 80, 82, 84 and 86 where the broad wavelength band image 74 is converted into a series of narrow wavelength band images. As will be appreciated, dichroic mirrors include a reflective surface configured to reflect radiation of a desired wavelength range, while allowing the remaining radiation to pass through. Specifically, the first dichroic mirror 80 includes a coating 88 configured to reflect radiation having a narrow wavelength band. For example, the reflected radiation may have a wavelength range of less than approximately 50, 40, 30, 20, 10, 5, 3, or 1 nm, or less. The radiation 92 passing through the first dichroic mirror 80 may have a wavelength range including each wavelength of the collimated beam 78 except for the wavelengths reflected by the first dichroic mirror 80.

The radiation corresponding to the narrow wavelength band image 90 may then pass through an optical device 94, such as a mirror or prism, configured to direct the radiation toward the detector array 42. Before reaching the detector array 42, the radiation may pass through a lens 96 which focuses the narrow wavelength band image 90 onto the detector array 42. In certain embodiments, the optical device 94 and/or the lens 96 may include a filter configured to further narrow the wavelength band of the image 90. For example, the optical device 94 and/or the lens 96 may narrow the wavelength range to less than approximately 50, 40, 30, 20, 10, 5, 3, or 1 nm, or less.

The radiation 92 having wavelengths not reflected by the first dichroic mirror 80 will pass through the first mirror 80 and be incident upon the second dichroic mirror 82. Similar to the first dichroic mirror 80, the second mirror 82 is configured to reflect radiation having a narrow wavelength band, while facilitating passage of the remaining wavelengths. The reflected radiation may then be directed toward the detector array 42 in a similar manner to the reflected radiation described above with regard to the first dichroic mirror 80. The dichroic mirrors 84 and 86 may function in a similar manner to provide radiation corresponding to two additional narrow wavelength band images to the detector amay 42. In this configuration, the detector array 42 will receive four narrow wavelength band images 90, each having a different wavelength range. While four dichroic mirrors 80, 82, 84 and 86 are employed in the illustrated embodiment to split the broad wavelength band image 74 into four narrow wavelength band images 90, it should be appreciated that more or fewer dichroic mirrors may be employed in alternative embodiments. For example, certain embodiments may include 2, 3, 4, 5, 6, 7, 8, or more dichroic mirrors to split the broad wavelength band image 74 into a corresponding number of narrow wavelength band images 90.

As previously discussed, the lenses 96 are configured to focus the narrow wavelength band images 90 onto the detector array 42. In the illustrated configuration, a single detector array 42 is employed to output a signal indicative of a two-dimensional intensity map of each narrow wavelength band image 90. Consequently, each lens 96 is configured to focus each narrow wavelength band image 90 onto a respective non-overlapping region of the detector array 42. In this manner, the detector array 42 may monitor the intensity map of each narrow wavelength band image 90. However, it should be appreciated that the resolution of each two-dimensional intensity map may be substantially equal to the resolution of the detector array 42 divided by the number of narrow wavelength band images 90 incident upon the array 42. Therefore, the resolution of each two-dimensional intensity map is inversely proportional to the number of narrow wavelength band images 90.

In certain embodiments, multiple detector arrays 42 may be employed to generate a higher resolution intensity map for each narrow wavelength band image 90. For example, each narrow wavelength band image 90 may be focused onto a separate detector array 42. Alternatively, a first portion (e.g., 2) of the narrow wavelength band images 90 may be focused onto a first detector array 42, and a second portion (e.g., 2) of the narrow wavelength band images 90 may be focused onto a second detector array 42. Such a configuration may increase the resolution of the two-dimensional intensity map for each narrow wavelength band image 90, thereby providing a more detailed two-dimensional temperature map. The higher resolution temperature map may provide a more accurate representation of the thermal stress associated with the monitored turbine component (e.g., first stage turbine blade 54). However, as will be appreciated, the cost of an imaging system 36 employing multiple detector arrays 42 may be greater than an imaging system 36 which employs a single array 42.

FIG. 4 is a schematic diagram of an alternative embodiment of a wavelength-splitting device 40 employing an image splitter and multiple filters to convert the broad wavelength band image 74 into multiple narrow wavelength band images. As illustrated, radiation from the first stage turbine blade 54 projects a broad wavelength band image 74 onto an image splitter 98. The image splitter 98 may include a series of lenses, prisms, mirrors and/or other reflective and/or refractive optics to split the broad wavelength band image 74 into multiple duplicate images 100. As will be appreciated, each duplicate image 100 includes a substantially similar spectral content (e.g., range of wavelengths) as the broad wavelength band image 74. In addition, the resolution and field of view of each duplicate image 100 may be substantially similar to the broad wavelength band image 74. However, it should be appreciated that the intensity of each duplicate image 100 may be inversely proportional to the number of duplicate images 100 generated by the image splitter 98. For example, because the image splitter 98 in the illustrated embodiment generates four duplicate images 100, the intensity of each duplicate image 100 may be approximately 25% of the intensity of the broad wavelength band image 74. While more or fewer duplicate images 100 (e.g., 2, 3, 4, 5, 6, 7, 8, or more) may be generated in alternative embodiments, it should be appreciated that the maximum number of duplicate images 100 may be limited by the sensitivity of the detector array 42. For example, the intensity of the images projected onto the detector array 42 may be sufficient for the controller 44 to generate a two-dimensional temperature map of the turbine blade 54.

Radiation corresponding to each duplicate image 100 is directed through an optical device 102, such as a mirror or prism, configured to direct the radiation toward a respective filter 104. Each filter 104 may be configured to facilitate passage of a narrow wavelength band, while blocking passage of the remaining wavelengths. For example, in certain embodiments, each filter 104 may be configured to facilitate passage of a wavelength band having a range of less than approximately 50, 40, 30, 20, 10, 5, 3, or 1 nm, or less. In addition, each filter 104 may facilitate passage of a different wavelength range to establish multiple narrow wavelength band images 106 projected toward the detector array 42. While four filters 104 are employed in the illustrated embodiment to establish four narrow wavelength band images 106, it should be appreciated that more or fewer filters 104 may be employed in alternative embodiments. For example, certain embodiments may include 2, 3, 4, 5, 6, 7, 8, or more filters 104 to establish a corresponding number of narrow wavelength band images 106.

After passing through the filters 104, radiation corresponding to each narrow wavelength band image 106 passes through a second optical device 108 which directs the radiation toward the detector array 42. Lenses 110, positioned between the second optical devices 108 and the detector array 42, focus the narrow wavelength band images 106 onto the detector array 42. In the illustrated configuration, a single detector array 42 is employed to output a signal indicative of a two-dimensional intensity map of each narrow wavelength band image 106. As previously discussed, because each narrow wavelength band image 106 is projected onto a single detector array 42, the resolution of each two-dimensional intensity map may be substantially equal to the resolution of the detector array 42 divided by the number of narrow wavelength band images 90 incident upon the array 42. Consequently, certain embodiments may employ multiple detector arrays 42 to generate a higher resolution intensity map for each narrow wavelength band image 106. Such embodiments may increase the resolution of the two-dimensional intensity map for each narrow wavelength band image 106, thereby providing a more detailed two-dimensional temperature map. The higher resolution temperature map may provide a more accurate representation of the thermal stress associated with the monitored turbine component (e.g., first stage turbine blade 54). However, as will be appreciated, the cost of an imaging system 36 employing multiple detector arrays 42 may be greater than an imaging system 36 which employs a single array 42.

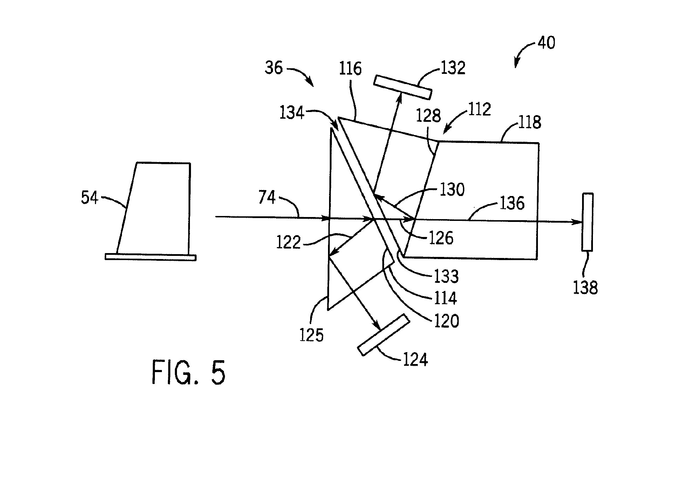

FIG. 5 is a schematic diagram of a further embodiment of a wavelength-splitting device 40 including a multichannel wavelength separation prism 112 to convert a broad wavelength band image into multiple narrow wavelength band images. As illustrated, the wavelength separation prism 112 includes a first prism 114 configured to separate a first wavelength, a second prism 116 configured to separate a second wavelength, and a third prism 118 configured to facilitate passage of the remaining wavelengths. In the illustrated embodiment, the first prism 114 includes a coating 120 configured to reflect radiation within a narrow wavelength band, while facilitating passage of the remaining wavelengths. For example, in certain embodiments, the reflected radiation may have a wavelength range of less than approximately 50, 40, 30, 20, 10, 5, 3, or 1 nm, or less. Similar to the dichroic mirror configuration described above, a narrow wavelength band image 122 associated with the reflected radiation is projected onto a detector array 124 such that the detector array 124 may output a signal indicative of an intensity map of the narrow wavelength band image 122. As illustrated, the reflected radiation is further reflected (e.g., via total internal reflection) off an uncoated surface 125 of the first prism 114 prior to projection onto the detector array 124.

Radiation 126 including wavelengths not reflected by the coating 120 then enters the second prism 116, where a second coating 128 reflects radiation within a narrow wavelength band, while facilitating passage of the remaining wavelengths. Similar to the first coating 120, the second coating 128 may reflect radiation having a wavelength range of less than approximately 50, 40, 30, 20, 10, 5, 3, or 1 nm, or less. As illustrated, a narrow wavelength band image 130 associated with the reflected radiation is projected onto a detector array 132 such that the detector array 132 may output a signal indicative of an intensity map of the narrow wavelength band image 130. Prior to projection onto the detector array 132, the radiation is reflected (e.g., via total internal reflection) off an uncoated surface 133 of the second prism 116 adjacent to a gap 134 between the first and second prisms 114 and 116. In this manner, the narrow wavelength band image 130 may be properly projected onto the detector array 132.

In certain embodiments, the radiation passing through the second coating 128 may include a narrow wavelength range. In such embodiments, radiation associated with a narrow wavelength band image 136 may pass through the third prism 118, and be directly projected onto a detector array 138. In alternative embodiments, the radiation passing through the second coating 128 may include a broad wavelength range. In such embodiments, the radiation may pass through a filter, similar to the filters 104 described above with reference to FIG. 4, to establish a desired narrow wavelength band image 136. Consequently, the multichannel wavelength separation prism 112 may function to generate multiple narrow wavelength band images 122, 130 and 136 which may be projected onto respective detector arrays 124, 132 and 138.

While the broad wavelength band image 74 is separated into three narrow wavelength band images in the illustrated embodiment, it should be appreciated that alternative embodiments may employ a multichannel wavelength separation prism configured to separate the broad wavelength band image 74 into more or fewer narrow wavelength band images. For example, in certain embodiments, the multichannel wavelength separation prism may be configured to produce 2, 3, 4, 5, 6, 7, 8, or more narrow wavelength band images. In addition, while the illustrated embodiment employs a separate detector array for each narrow wavelength band image, it should be appreciated that alternative embodiments may include a single detector array configured to receive all of the images. For example, optical devices configured to direct radiation associated with each narrow wavelength band image toward a single detector array may be employed in certain embodiments. Further embodiments may include filters, such as the filters 104 described above with reference to FIG. 4, positioned between the multichannel wavelength separation prism 112 and the detector arrays 124, 132 and/or 138 to further narrow the wavelength range of the narrow wavelength band images 122, 130 and/or 136.

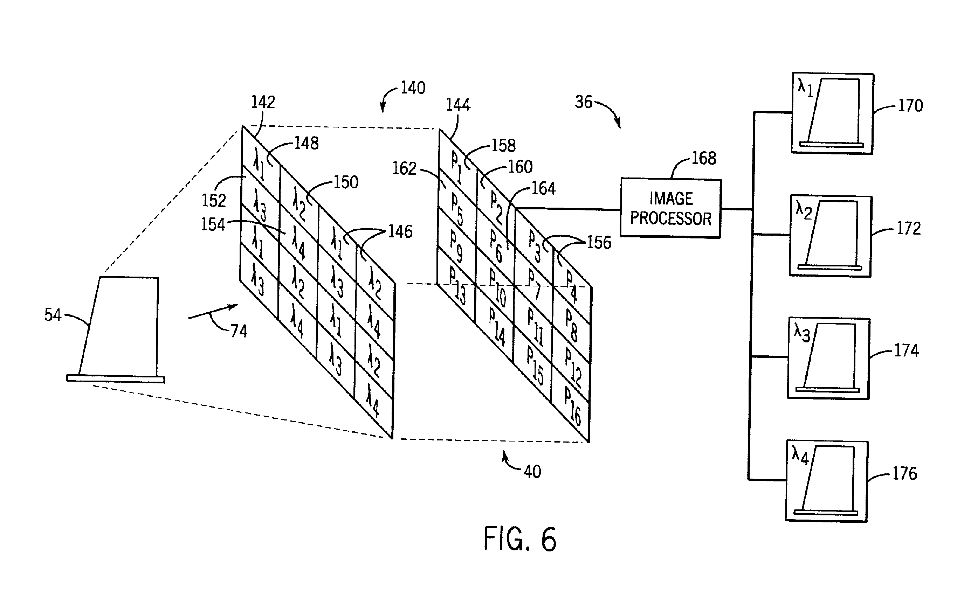

FIG. 6 is a schematic diagram of yet another embodiment of a wavelength-splitting device 40 including a filter mask having multiple narrow wavelength band filters to convert the broad wavelength band image 74 into multiple narrow wavelength band images. In the illustrated embodiment, the detector array 42 and the wavelength-splitting device 40 are combined into a single unit 140 which receives a broad wavelength band image 74 and outputs a signal indicative of two-dimensional intensity maps of each narrow wavelength band image. The combined unit 140 includes a filter mask 142 and a corresponding detector array 144. As illustrated, the filter mask 142 includes multiple filters 146 each configured to facilitate passage of a narrow wavelength range, while blocking passage of the remaining wavelengths. The illustrated embodiment includes four different filter configurations. The first filter configuration 148 is configured to facilitate passage of a first wavelength range, designated as λ₁; the second filter configuration 150 is configured to facilitate passage of a second wavelength range, designated as λ₂; the third filter configuration 152 is configured to facilitate passage of a third wavelength range, designated as λ₃; and the fourth filter configuration 154 is configured to facilitate passage of a fourth wavelength range, designated as λ₄. Similar to the filters 104 described above with reference to FIG. 4, each filter configuration 148, 150, 152 and 154 may be configured to facilitate passage of radiation having a wavelength range of less than approximately 50, 40, 30, 20, 10, 5, 3, or 1 nm, or less.

While the illustrated filter mask 142 includes four different filter configurations 148, 150, 152 and 154, it should be appreciated that alternative embodiments may include more or fewer filter configurations. For example, certain embodiments may include 2, 3, 4, 5, 6, 7, 8, or more filter configurations to facilitate passage of a corresponding number of wavelength ranges. In further embodiments, certain filters 146 may be configured to facilitate passage of substantially all wavelengths incident upon the filter. In this manner, certain elements of the detector array 144 may be exposed to the broad wavelength band image 74. In the illustrated embodiment, the filter configurations 148, 150, 152 and 154 are arranged as a series of 2-by-2 squares within the filter mask 142. It should be appreciated that alternative embodiments may employ other patterns of filter configurations. For example, each filter configuration may be arranged along alternating rows or alternating columns. For example, a first column of the filter mask 142 may include filters of the first configuration 148, a second column may include filters of the second configuration 150, the third column may include filters of the third configuration 152, the fourth column may include filters of the fourth configuration 154, and the pattern may repeat across the filter mask 142.

As illustrated, the filter mask 142 is aligned with the detector array 142 such that each filter 146 is positioned adjacent to a corresponding detector element 156. In this manner, each detector element 156 receives a narrow wavelength band signal having a wavelength range corresponding to the radiation passing through the respective filter 146. In the illustrated embodiment, a filter of the first configuration 148 is aligned with a first detector element 158, a filter of the second configuration 150 is aligned with a second detector element 160, a filter of the third configuration 152 is aligned with a third detector element 162, and a filter of the fourth configuration 154 is aligned with a fourth detector element 164. In this manner, the first detector 158, designated as P₁, receives a signal having a wavelength range of λ₁; the second detector 160, designated as P₂, receives a signal having a wavelength range of λ_{2;} the third detector 162, designated as P₅, receives a signal having a wavelength range of λ₃; and the fourth detector element 164, designated as P₆, receives a signal having a wavelength range of λ₄. Because the filter pattern repeats throughout the filter mask 142, the detector elements designated as P₁, P₃, P₉ and P₁₁ will receive a signal having a wavelength range of λ₁, the detector elements designated as P₂, P₄, P₁₀ and P₁₂ will receive a signal having a wavelength range of λ₂, the detector elements designated as P₅, P₇, P₁₃ and P₁₅ will receive a signal having a wavelength range of λ₃, and the detector elements designated as P₆, P₈, P₁₄ and P₁₆ will receive a signal having a wavelength range of λ₄. Consequently, each narrow wavelength band image will be distributed across the detector array 144.

While the illustrated embodiment employs a 4-by-4 filter mask 142 and a 4-by-4 detector array 144, it should be appreciated that alternative embodiments may employ significantly larger filter masks 142 and detector arrays 144. For example, certain filter masks 142 may include thousand or even millions of filters 146, and the detector array 144 may include a corresponding number of detector elements 156. As will be appreciated, the resolution of the two-dimensional intensity maps is at least partially dependent on the number of detector elements 156 employed within the detector array 144.

As previously discussed, each narrow wavelength band image is distributed across the detector array 144. Consequently, the detector array 144 is communicatively coupled to an image process 168 configured to establish a two-dimensional intensity map of each narrow wavelength band image by reconstructing the image based on the configuration of the filter mask 142. For example, in the illustrated embodiment, the image processor 168 may reconstruct a first narrow wavelength band image 170 having a wavelength range of λ₁ by combining the signal received from detector elements 156 designated as P₁, P₃, P₉ and P₁₁. Similarly, the image processor 168 may reconstruct a second narrow wavelength band image 172 having a wavelength range of λ₂ by combining the signal received from detector elements 156 designated as P₂, P₄, P₁₀ and P₁₂. In addition, the image processor 168 may reconstruct a third narrow wavelength band image 174 having a wavelength range of λ₃ by combining the signal received from detector elements 156 designated as P₅, P₇, P₁₃ and P₁₅. Furthermore, the image processor 168 may reconstruct a fourth narrow wavelength band image 176 having a wavelength range of λ₄ by combining the signal received from detector elements 156 designated as P₆, P₈, P₁₄ and P₁₆. In this manner, four two-dimensional intensity maps will be output to the controller 44 such that the controller 44 may generate a two-dimensional temperature map of the first stage turbine blade 54.

In further embodiments, different regions of the detector array 144 may be configured to receive the narrow wavelength band images at various times. For example, the upper left 2-by-2 region (elements P₁, P₂, P₅ and P₆) may receive the images at a first time interval, the upper right 2-by-2 region (elements P₃, P₄, P₇ and P₈) may receive the images at a second time interval, the lower left 2-by-2 region (elements P₉, P₁₀, P₁₃ and P₁₄) may receive the images at a third time interval, and the lower right 2-by-2 region (elements P₁₁, P₁₂, P₁₅ and P₁₆) may receive the images at a fourth time interval. A shutter mechanism, either incorporated within the filters 146 or positioned between the filter mask 142 and the detector array 144, may serve to selectively block radiation to each region of the detector array 144 until the desired time interval is reached. As will be appreciated, the shutter mechanism may be a mechanical or electromechanical device, or an electronically controlled polarizing filter, for example. By particularly adjusting the time interval, the detector array 144 may capture multiple perspectives of the turbine blade 54 as the blade 54 rotates through the field of view. For example, the time interval may be less than approximately 5000, 2000, 1000, 500 or 100 nanoseconds, or less.

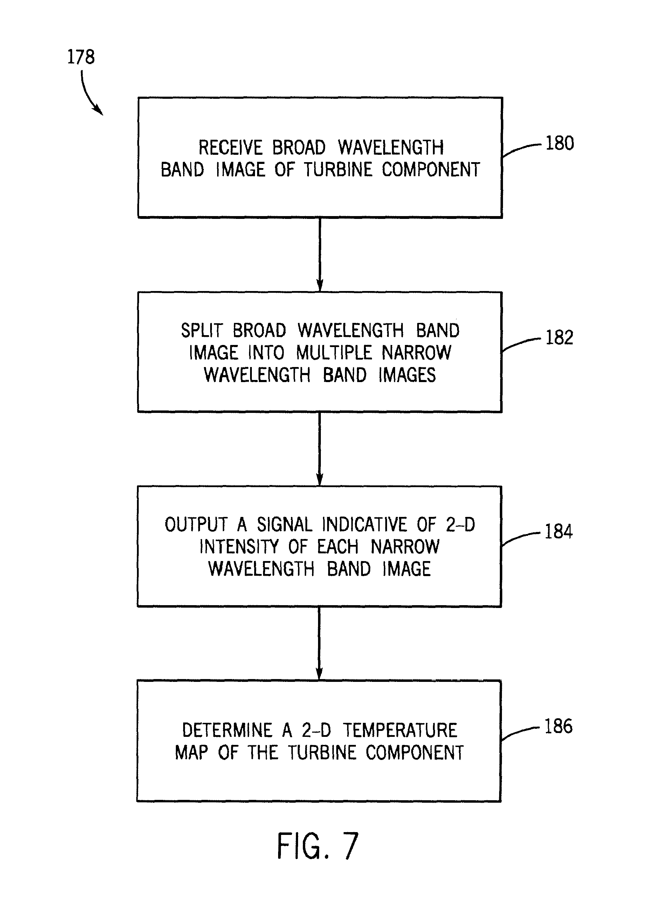

FIG. 7 is a flowchart of a method 178 for determining a two-dimensional temperature map of a turbine component. First, as represented by block 180, a broad wavelength band image of a turbine component is received. Next, the broad wavelength band image is split into multiple narrow wavelength band images, as represented by block 182. As discussed above, such a wavelength splitting operation may be performed by a series of dichroic mirrors 80, 82, 84 and 86, as shown in FIG. 3, a combination of an image splitter 98 and a series of filters 104, as shown in FIG. 4, a multichannel wavelength separation prism 112, as shown in FIG. 5, a filter mask 142, as shown in FIG. 6, or any other suitable wavelength-splitting device 40. A signal indicative of a two-dimensional intensity map of each narrow wavelength band image is then output, as represented by block 184. As previously discussed, the process of converting each narrow wavelength band image into a representative signal may be performed by one or more detector arrays 42. Finally, as represented by block 186, a two-dimensional temperature map of the turbine component is determined. As previously discussed, because the controller 44 receives multiple narrow wavelength band images, the controller 44 may be able to compute an apparent-effective emissivity of the turbine component such that a more accurate temperature may be determined, as compared to pyrometry systems which compute temperature based on a single narrow wavelength band image. In addition, because the detector array 42 and controller 44 are configured to provide a two-dimensional temperature map of the turbine component, thermal stress within the component may be determined by measuring a thermal gradient across the turbine component.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   a turbine;
   a viewing port into the turbine;
   a wavelength-splitting device in optical communication with the viewing port, wherein the wavelength-splitting device is configured to split a broad wavelength band image of a turbine component into a plurality of narrow wavelength band images; and
   at least one detector array in optical communication with the wavelength-splitting device, wherein the at least one detector array is configured to receive the plurality of narrow wavelength band images, and to output a signal indicative of a two-dimensional intensity map of each narrow wavelength band image.
2. The system of clause 1, wherein the wavelength-splitting device comprises a plurality of dichroic mirrors.
3. The system of clause 1, wherein the wavelength-splitting device comprises an image splitter configured to split the broad wavelength band image into a plurality of duplicate images, and a plurality of narrow wavelength band filters configured to receive a respective duplicate image and to filter the respective duplicate image to obtain a respective narrow wavelength band image.
4. The system of clause 1, wherein the wavelength-splitting device comprises a multichannel wavelength separation prism.
5. The system of clause 1, wherein the wavelength-splitting device comprises a filter mask having a plurality of narrow wavelength band filters, wherein each narrow wavelength band filter is in optical communication with a respective detector element of the at least one detector array.
6. The system of clause 1, wherein the at least one detector array comprises a single detector array, and each of the plurality of narrow wavelength band images is focused onto a non-overlapping region of the single detector array.
7. The system of clause 1, wherein the at least one detector array comprises a plurality of detector arrays, and each detector array is configured to receive one of the plurality of narrow wavelength band images.
8. The system of clause 1, wherein the wavelength-splitting device is optically coupled to the viewing port by a fiber optic cable or an imaging optical system.
9. The system of clause 1, comprising a controller communicatively coupled to the at least one detector array and configured to determine a two-dimensional temperature map of the turbine component based on the signal.
10. A system comprising:
   a turbine comprising a plurality of components in fluid communication with a working fluid that provides power or thrust; and
   an imaging system in optical communication with at least one component of the plurality of components, wherein the imaging system is configured to receive a broad wavelength band image of the at least one component during operation of the turbine, to split the broad wavelength band image into a plurality of narrow wavelength band images, and to output a signal indicative of a two-dimensional intensity map of each narrow wavelength band image.
11. The system of clause 10, wherein the imaging system is optically coupled to the turbine by a fiber optic cable or an imaging optical system.
12. The system of clause 10, comprising a plurality of viewing ports into the turbine, wherein the imaging system is in optical communication with the at least one component through the plurality of viewing ports.
13. The system of clause 10, wherein a wavelength range of each narrow wavelength band image is less than approximately 50 nm.
14. The system of clause 10, wherein the imaging system is configured to output the signal indicative of the two-dimensional intensity map of each narrow wavelength band image with an integration time shorter than approximately 10 microseconds.
15. The system of clause 10, wherein the imaging system is configured to determine a two-dimensional temperature map of the at least one component based on the signal.
16. A method comprising:
   receiving a broad wavelength band image of a turbine component,
   splitting the broad wavelength band image into a plurality of narrow wavelength band images; and
   outputting a signal indicative of a two-dimensional intensity map of each narrow wavelength band image.
17. The method of clause 16, comprising determining two-dimensional temperature and emissivity maps of the turbine component based on the signal.
18. The method of clause 16, wherein splitting the broad wavelength band image into the plurality of narrow wavelength band images comprises directing the broad wavelength band image through a plurality of dichroic mirrors.
19. The method of clause 16, wherein splitting the broad wavelength band image into the plurality of narrow wavelength band images comprises splitting the broad wavelength band image into a plurality of duplicate images and filtering each duplicate image to obtain a respective narrow wavelength band image.
20. The method of clause 16, wherein splitting the broad wavelength band image into the plurality of narrow wavelength band images comprises directing the broad wavelength band image through a multichannel wavelength separation prism.
21. A system comprising:
   a turbine comprising a plurality of components in fluid communication with a working fluid that provides power or thrust;
   a wavelength-splitting device in optical communication with at least one component, wherein the wavelength-splitting device comprises a plurality of dichroic mirrors configured to progressively split a broad wavelength band image of the at least one component into a plurality of narrow wavelength band images; and
   at least one detector in optical communication with the wavelength-splitting device, wherein the at least one detector is configured to receive the plurality of narrow wavelength band images, and to output a signal indicative of an intensity of each narrow wavelength band image.
22. The system of clause 21, comprising a controller communicatively coupled to the at least one detector and configured to determine temperature and emissivity of the at least one component based on the signal.
23. The system of clause 21, wherein the wavelength-splitting device is optically coupled to the turbine by a fiber optic cable or an imaging optical system.
24. The system of clause 21, wherein a wavelength range of each narrow wavelength band image is less than approximately 50 nm.
25. The system of clause 21, comprising a filter disposed between at least one dichroic mirror and the at least one detector, wherein the filter is configured to reduce a wavelength range of the narrow wavelength band image.

## Claims

1. A system (10) comprising:
a turbine (18);
a viewing port (39) into the turbine (18);
a wavelength-splitting device (40) in optical communication with the viewing port (39), wherein the wavelength-splitting device (40) is configured to split a broad wavelength band image (74) of a turbine component (52, 54, 58, 60, 62, 66, 70, 72) into a plurality of narrow wavelength band images (90, 106, 122, 130, 136, 170, 172, 174, 176); and
at least one detector array (42, 124, 132, 138, 144) in optical communication with the wavelength-splitting device (40), wherein the at least one detector array (42, 124, 132, 138, 144) is configured to receive the plurality of narrow wavelength band images (90, 106, 122, 130, 136, 170, 172, 174, 176), and to output a signal indicative of a two-dimensional intensity map of each narrow wavelength band image (90, 106, 122, 130, 136, 170, 172, 174, 176).

2. The system (10) of claim 1, wherein the wavelength-splitting device (40) comprises a plurality of dichroic mirrors (80, 82, 84, 86).

3. The system (10) of claim 1 or 2, wherein the wavelength-splitting device (40) comprises an image splitter (98) configured to split the broad wavelength band image (74) into a plurality of duplicate images (100), and a plurality of narrow wavelength band filters (104) configured to receive a respective duplicate image (100) and to filter the respective duplicate image (100) to obtain a respective narrow wavelength band image (106).

4. The system (10) of any of the preceding claims, wherein the wavelength-splitting device (40) comprises a multichannel wavelength separation prism (112).

5. The system (10) of any of the preceding claims, wherein the wavelength-splitting device (40) comprises a filter mask (142) having a plurality of narrow wavelength band filters (146), wherein each narrow wavelength band filter (146) is in optical communication with a respective detector element (156) of the at least one detector array (144).

6. The system (10) of any of the preceding claims, wherein the at least one detector array (42, 124, 132, 138, 144) comprises a single detector array (42, 144), and each of the plurality of narrow wavelength band images (90, 106, 122, 130, 136, 170, 172, 174, 176) is focused onto a non-overlapping region of the single detector array (42, 144).

7. The system (10) of any of the preceding claims, wherein the at least one detector array (42, 124, 132, 138, 144) comprises a plurality of detector arrays (124, 132, 138), and each detector array (124, 132, 138) is configured to receive one of the plurality of narrow wavelength band images (90, 106, 122, 130, 136, 170, 172, 174, 176).

8. The system (10) of any of the preceding claims, wherein the wavelength-splitting device (40) is optically coupled to the viewing port (39) by a fiber optic cable or an imaging optical system (38).

9. The system (10) of any of the preceding claims, comprising a controller (44) communicatively coupled to the at least one detector array (42, 124, 132, 138, 144) and configured to determine a two-dimensional temperature map of the turbine component (52, 54, 58, 60, 62, 66, 70, 72) based on the signal.

10. The system (10) of any of the preceding claims, wherein a wavelength range of each narrow wavelength band image (90, 106, 122, 130, 136, 170, 172, 174, 176) is less than approximately 50 nm.

11. A method comprising:
receiving a broad wavelength band image of a turbine component;
splitting the broad wavelength band image into a plurality of narrow wavelength band images; and
outputting a signal indicative of a two-dimensional intensity map of each narrow wavelength band image.

12. The method of claim 11, comprising determining two-dimensional temperature and emissivity maps of the turbine component based on the signal.

13. The method of claim 11 or 12, wherein splitting the broad wavelength band image into the plurality of narrow wavelength band images comprises directing the broad wavelength band image through a plurality of dichroic mirrors.

14. The method of any of claims 11 to 13, wherein splitting the broad wavelength band image into the plurality of narrow wavelength band images comprises splitting the broad wavelength band image into a plurality of duplicate images and filtering each duplicate image to obtain a respective narrow wavelength band image.

15. The method of claim 11, wherein splitting the broad wavelength band image into the plurality of narrow wavelength band images comprises directing the broad wavelength band image through a multichannel wavelength separation prism.
